# EUROPEAN PATENT APPLICATION

(11) **EP 4 112 362 A1**
(43) Date of publication of application: **04.01.2023**
(21) Application number: 21461561.9
(22) Date of filing: 29.06.2021
(51) Int. Cl.: B60L 53/10, B60L 53/30, B60L 53/67, B60L 53/63, B60L 53/64, B60L 53/53

(54) **TERMINAL FOR CHARGING ELECTRIC VEHICLES WITH ELECTROCHEMICAL ENERGY STORAGE**

(71) Applicant: Ekoenergetyka - Polska Sp. z o.o., 66-002 Zielona Gora (PL)
(72) Inventor: STANDO, Dariusz, Warszawa (PL); CHUDZIK, Przemyslaw, Warszawa (PL); KRYNSKI, Arkadiusz, Warszawa (PL); PILIMON, Lukasz, Zielona Gora (PL); KOMADZINSKI, Marcin, Nowa Sol (PL); KANIEWSKI, Jacek, Zielona Gora (PL); JARNUT, Marcin, Zielona Gora (PL)
(74) Representative: Kancelaria Eupatent.pl Sp. z.o.o

(57) **Abstract**

The invention is a fully scalable charging terminal (200) for electric vehicles (130) supported by a local energy storage. It includes: at least one AC/DC bidirectional mains converter (111), at least one DC/DC bidirectional storage converter (113), at least one DC/DC unidirectional vehicle converter (112), an energy storage (115), a control unit (240), a switch matrix (250) and at least one charging point (260). The control method (500) of the charging terminal (200) and the dispersed system (400) of charging terminals are also disclosed.

## Description

### TECHNICAL FIELD

The present invention relates to a scalable DC rapid charging terminal for electric vehicles supported by an electrochemical energy storage enabling also two-way energy flow between the electrochemical energy storage and the power grid.

### BACKGROUND

The dynamic increase in the share of electric vehicles in the automotive market requires equally dynamic development of the charging infrastructure. To cope with the rapid development of electromobility, it is also necessary to adapt the power grid infrastructure for rapid charging of electric vehicles. In the case of rapid chargers, the impulse-wise of energy consumption is disadvantageous for the power grid. When several electric vehicles are simultaneously charged at the same charging station using quick chargers, high momentary loads on the power grid occur. It is therefore rational to look for solutions to make energy consumption of these chargers more balanced throughout the daily cycle.

Patent description US20200039378A1 provides technical solution of the electric vehicle charging station with a variable number of power electronic modules and a variable number of charging points. The disclosed system may include up to two charging points and up to two charging columns consisting of power electronic modules transforming the electricity drawn from the grid and supplied in an appropriate form to the charged vehicles. In addition, each of the charging columns can be supported by an energy buffer consisting of batteries.

The US7768229B2 patent description provides for a solution for an electric vehicle charging station, which includes the mains power supply system, electric vehicle charging system and battery system. This solution ensures that one vehicle is charged by one electric vehicle charging system. There may be many charging systems within one charging station. The battery system consisting of a battery charging module and an energy storage is responsible for mitigating overloads in the power grid coming from charging stations and ensuring the possibility of charging vehicles in the event of a power failure. In this invention, each vehicle charging system can have one battery system connected or several vehicle charging systems can be connected to a single battery system.

In addition, patent description US5847537A presents a charging system for electric vehicles with multiple charging ports (points). The system, however, has a single power converter, and cannot be used to charge multiple vehicles simultaneously, due to the different input voltage of each vehicle. To enable simultaneous charging multiple electric vehicles, DC/DC converters must be used before each charging port.

### SUMMARY

The block and modular structure of the invention presented herein is advantageous for the direct current (DC) rapid charger. The solution employs three types of power electronic modules: mains converter, storage converter and vehicle converter. Parallel connection of each module type provides blocks with dedicated functionality and allows for easy adjustment of the power of each block to the application needs of the terminal. All modules share a DC-Link circuit, which allows the free flow of energy between the module blocks and provides more freedom in configuring terminal power. The number of mains modules connected in parallel determines the power consumed or supplied to the power grid, whereas the number of storage modules determines the power exchanged between the DC-Link circuit and the energy storage, the number of vehicle modules determines the charging power of the vehicles.

Operation of the terminal is managed by one control unit, which communicates with each of the modules using a serial bus, which also provides a lot of freedom in configuring the number of modules of each type.

Use of an energy storage in the charging terminal and the ease of changing the number of storage and mains converters allows for terminal optimization in terms of balancing the power consumption from the power grid throughout the day and the optimal use of the declared power connection capacity. This translates into eliminating the problem of impulse energy consumption by quick electric vehicle chargers.

Thanks to the application of a bidirectional mains converter and the possibility of implementing Internet communication with the electricity distributor, the invention also enables cooperation with the power grid. This functionality allows the terminal to operate in an island power grid system, where it can serve as an energy source for local consumers and an energy buffer used for the grid.

The invention consists of a fully scalable charging terminal (CT) supported by a local energy storage. It consists of three types of modules: AC/DC (Alternating Current / Direct Current) bidirectional mains converter module, DC/DC bidirectional storage converter module and DC/DC unidirectional vehicle converter module. Each of these modules can be combined in parallel, which allows to easily increase the terminal's charging power. The terminal can be equipped with multiple charging points (CP) and each of them can be used to charge one electric vehicle (EV). Many vehicles can be simultaneously charged from multiple charging points with a total power equivalent to the terminal's rated charging power, or one vehicle can be charged with the maximum power available to the terminal. This functionality results from the parallel arrangement of the modules and their easy connection to any charging point thanks to appropriate configuration of a switch matrix (SW).

### BRIEF DESCRIPTION OF DRAWINGS

Further details and features of the present invention, its nature and various advantages will become more apparent from the following detailed description of the preferred embodiments shown in a drawing, in which:
Fig. 1 shows the block diagram of the electric vehicle charging terminal in its basic configuration;
Fig. 2, Fig. 3, Fig. 4. Fig. 5 and Fig. 6 show the functional properties of each of the basic modules of the charging terminal from Fig. 1;
Fig. 7 presents a detailed block diagram of the electric vehicle charging terminal;
Fig. 8 presents an example configuration of the electric vehicle charging terminal from Fig. 7;
Fig. 9 illustrates exemplary daily fluctuation of energy stored in the energy storage and changes in the power of the mains converter blocks of the charging terminal;
Fig. 10 shows the block diagram of the control unit of the charging terminal from Fig. 7;
Fig. 11 presents the general structure of the dispersed charging terminal system;
Fig. 12 presents a charging terminal system cooperating with the power grid in an island system;
Fig. 13 shows a generic method of controlling the charging terminal.

### DETAILED DESCRIPTION

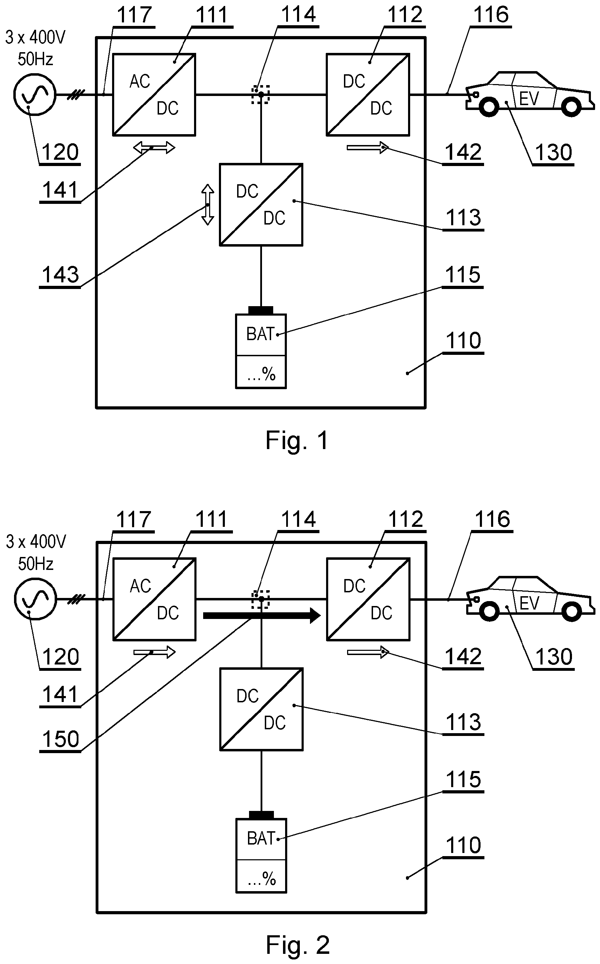

The electric vehicle charging terminal CT 200 in its basic configuration 110 (Fig. 1) consists of: three types of modules (converters): AC/DC bidirectional mains converter module 111, DC/DC bidirectional storage converter module 113, DC/DC unidirectional vehicle converter module 112; an energy storage BAT (Battery) 115, a DC-Link circuit 114; a connection 116 to an electric vehicle EV 130 and a connection 117 to a power grid 120.

The functional properties of each of the modules 111, 112, 113 are shown in Fig. 1-Fig. 6. For clarity of depicting functionality of the modules, Fig. 1-Fig. 6 do not include a detailed block diagram of the presented charging terminal for electric vehicles. The following elements have been omitted: a main control unit (CU) 240, a switch matrix SW 250 and a charging point CP 260.

Additionally Fig. 1-Fig. 6 show the energy flow directions in the used power electronic converters 111, 112, 113 (respectively: 141, 142 and 143) and the energy flow direction 150 in the charging terminal 110. The mains converter 111 and the storage converter 113 allow for a two-way energy flow, while the vehicle converter 112 only allows for charging batteries of electric vehicles.

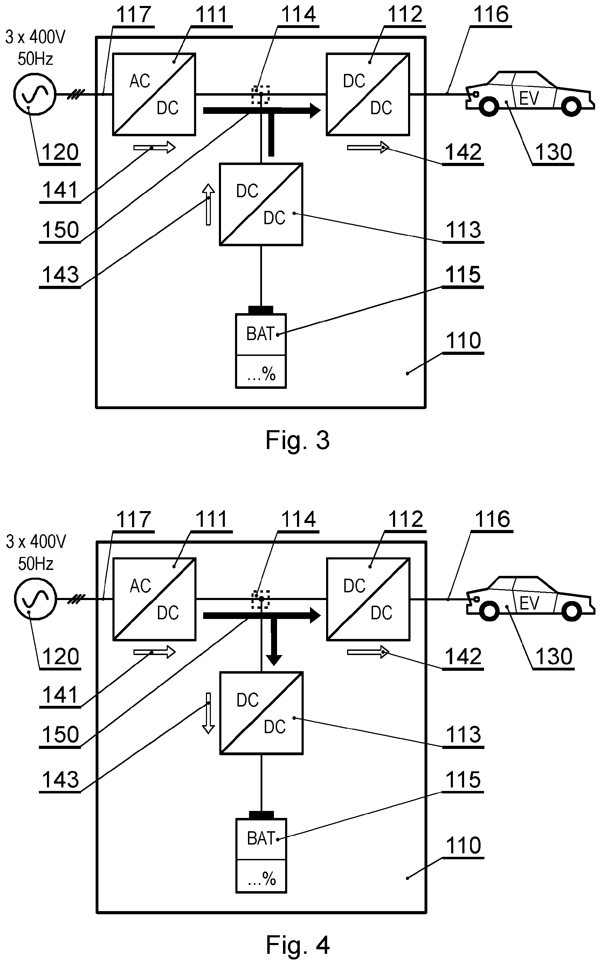

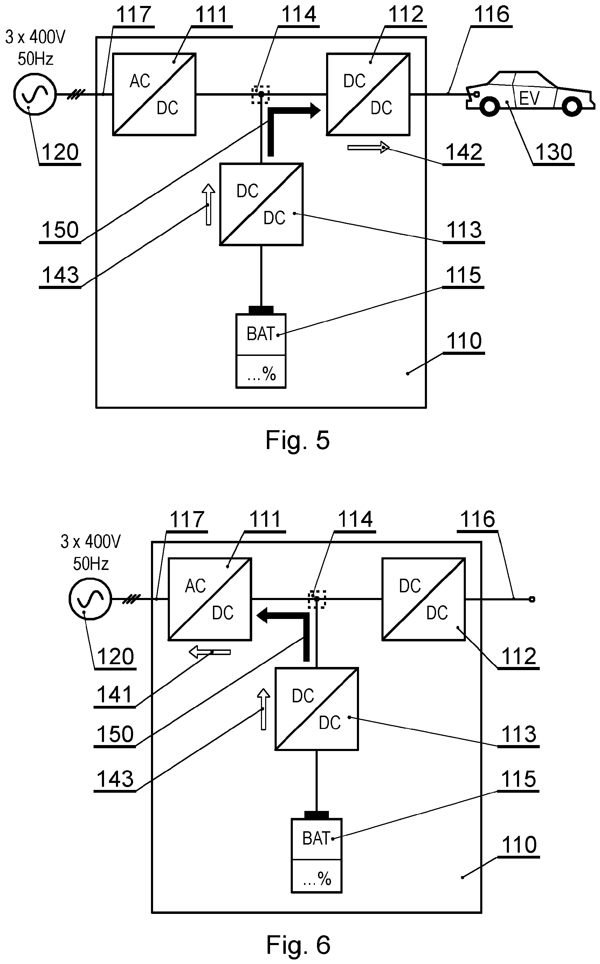

The energy storage 115 can act as an energy buffer when charging electric vehicles 130 and thereby it can balance the energy consumption from the power grid 120 (Fig. 3). It can also be used as an source of energy for charging electric vehicles 130 (Fig. 5) and a source returning the stored energy to the power grid 120 (Fig. 6).

The energy storage 115 is an electrochemical battery. It is possible to use different types of batteries, such as lithium-ion, lithium-polymer, lead-acid and others using chemical reactions to store electrical power. It is also possible to use hybrid battery, such as a combination of flow and lithium-ion batteries or others to increase battery efficiency. It is also possible to use B2U (Battery Second Use).

Five different operating modes (scenarios) are envisaged in the charging terminal:
- Charging the battery of the vehicle 130 with power from the power grid 120 (Fig. 2), in which the mains converter 111 supplies energy to the vehicle converter 112 via the DC-Link circuit 114.
- Charging the battery of the vehicle 130 with power from the power grid 120 and the energy storage 115 (Fig. 3) in which the mains converter 111 together with the storage converter 113 provide power to the vehicle converter 112.
- Charging the battery of the vehicle 130 and the energy storage 115 from the power grid 120 (Fig. 4) where the energy supplied by the mains converter 111 to the DC-Link circuit 114 is consumed both by the storage converter 113, which charges the energy storage 115, and by the vehicle converter 112, which charges the battery of the vehicle 130.
- Charging the battery of the vehicle 130 from the energy storage 115 (Fig. 5), in which the vehicle converter 112 draws all the power supplied to the DC-Link circuit 114 via the storage converter 113.
- Returning power to the power grid 120 (Fig. 6), where the power drawn from the energy storage 115 by the storage converter 113 is returned to the power grid 120 by means of the mains converter 111.

The AC/DC bidirectional mains converter 111 couples the power grid 120 with the DC-Link circuit 114, common to all three types of modules 111, 112, 113. Its main task is to draw and return energy from and to the power grid 120 while maintaining a constant voltage in the DC-Link circuit 114.

The DC/DC bidirectional storage converter 113 couples the DC-Link circuit 114 with the energy storage 115. It can store or return energy from the energy storage 115 to the DC-Link circuit 114. Depending on whether galvanic isolation is necessary between the DC-Link circuit 114 and the energy storage 115, the storage converter 113 used will meet this requirement. The operating voltage of the storage converter 113 on the energy storage 115 side is adapted to the operating voltage of the energy storage 115.

More than one energy storage 115 can be used per charging terminal. The batteries used may be of the same type or each of them may be built with different types of batteries and/or with different operating voltage ranges. The use of varied types of batteries determines the assignment of at least one storage converter 113 to each of them.

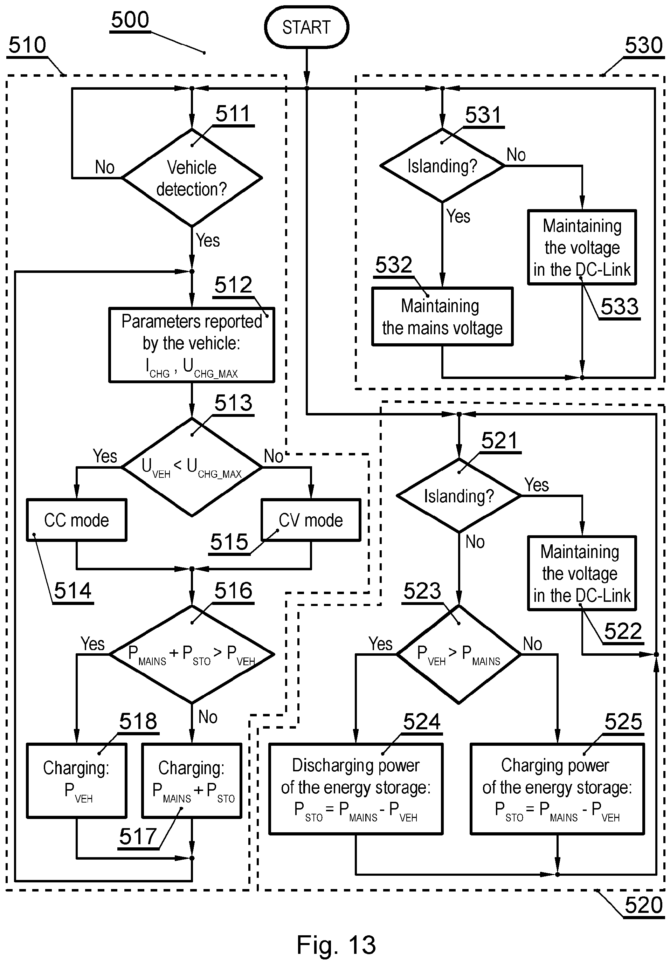

The DC/DC unidirectional vehicle converter 112 is powered from the DC-Link circuit 114. It adapts the charging parameters of the battery of the electric vehicle 130 to the needs reported by the control unit 240. The converter 112 also provides galvanic isolation for the vehicle 130 being charged from the power grid 120 and the energy storage 115. It can operate in two battery charging modes: CC (Constant Current) - step 514 of control path 510 from Fig. 13, CV (Constant Voltage) - step 515 of control path 510 from Fig. 13. Depending on the selected charging mode of the vehicle130, the vehicle converter 112 receives information from the control unit 240 about the value of the charging parameter, which can be either the set current in CC mode or the set voltage in CV mode. The output voltage of the vehicle converter 112 is adjusted to the standard with which the electric vehicle 130 being charged operates, e.g.: CHAdeMO 2.0, CCS (Combined Charging System) with Type 2 socket or other. The output current from the vehicle converter 112, on the other hand, is limited by the maximum permissible charging current declared by the vehicle 130 and the maximum current available at the charging point 260 of the charging terminal 200.

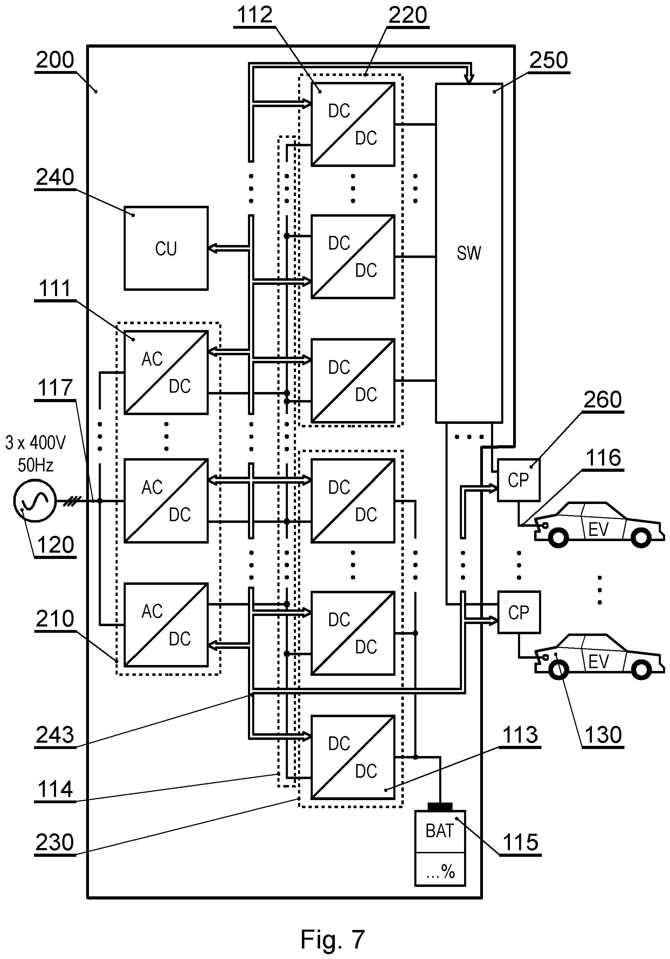

The detailed block structure of the charging terminal 200 is shown in Fig. 7. As shown in Fig. 7, the charging terminal 200 may consist of at least one mains converter 111, at least one vehicle converter 112, at least one storage converter 113, the DC-Link circuit 114, at least one energy storage 115, the control unit 240, the switch matrix 250 and at least one charging point 260.

N mains converters 111 with nominal power P_{N} form a mains converter block 210 with total power N×P_{N}. It is possible that only some of the installed mains converters 111 operate at a given moment. Their number is determined by the power drawn from/returned to the power grid120. If N=2 and the power drawn from/returned to the power grid 120 is lower than P_{N}, one of the converters 111 is in operation. Then, when the power drawn from/returned to the power grid 120 exceeds P_{N}, another mains converter 111 is launched, and the power drawn from/returned to the power grid 120 is divided equally between the two converters 111. Operation of the storage converters 113 is organized in the same way, forming a storage converter block 230, and the vehicle converters 112, forming a vehicle converter block 220. Converters of the same type are connected in parallel with the inputs and outputs, to the exception of the vehicle converter 112 outputs, that are configured with the switch matrix 250.

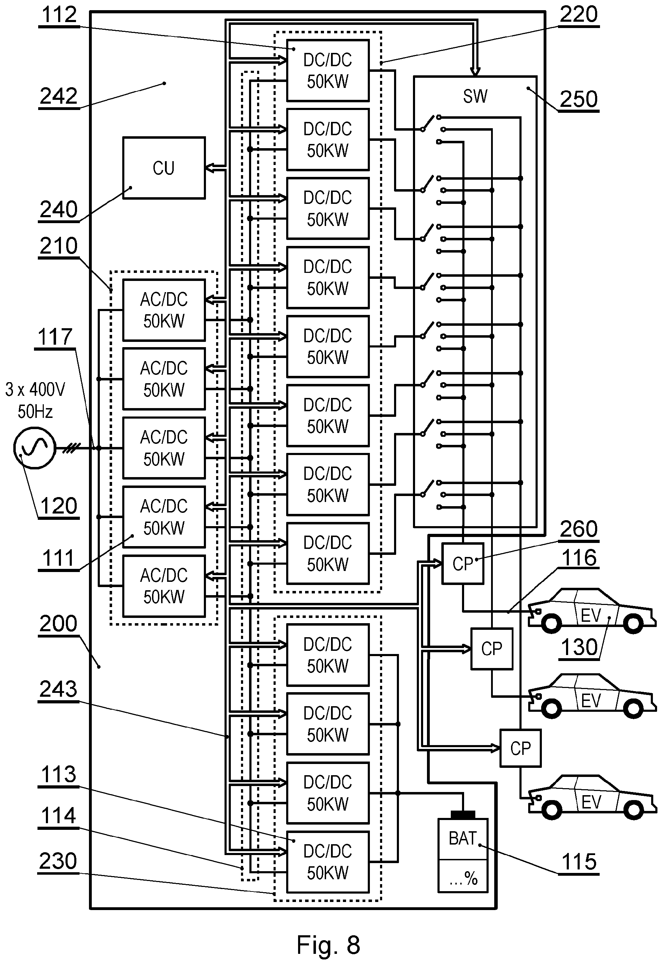

Outputs of the vehicle converters 112 of the block 220 are connected to switch matrix 250. The switch matrix 250 is intended to connect outputs of the vehicle converters 112 in parallel and connect them to the selected charging point 260. Switch conditions in the matrix 250 are controlled by an internal control system (not shown in Fig. 7 and Fig. 8) based on data received from the control unit 240.

Each of the charging points 260 is adapted to charge vehicles 130 in at least one of the applicable charging standards, such as CHAdeMO 2.0, CCS Type 2 or other. The charging standard determines the use of the appropriate connection 116 (a connector, high-current cables, signal cables) between the charging point 260 and the vehicle 130. In addition, the charging point 260 has a built-in control system (not shown in Fig. 7 and Fig. 8), responsible for communication with the vehicle 130 being charged and the control unit 240. The charging standard served by the vehicle 130 and the charging point 260 is used for communication with the vehicle 130, for example CAN (CHAdeMO), Control Pilot (CCS) or other. Additionally, the charging point 260 monitors the charging voltage and current.

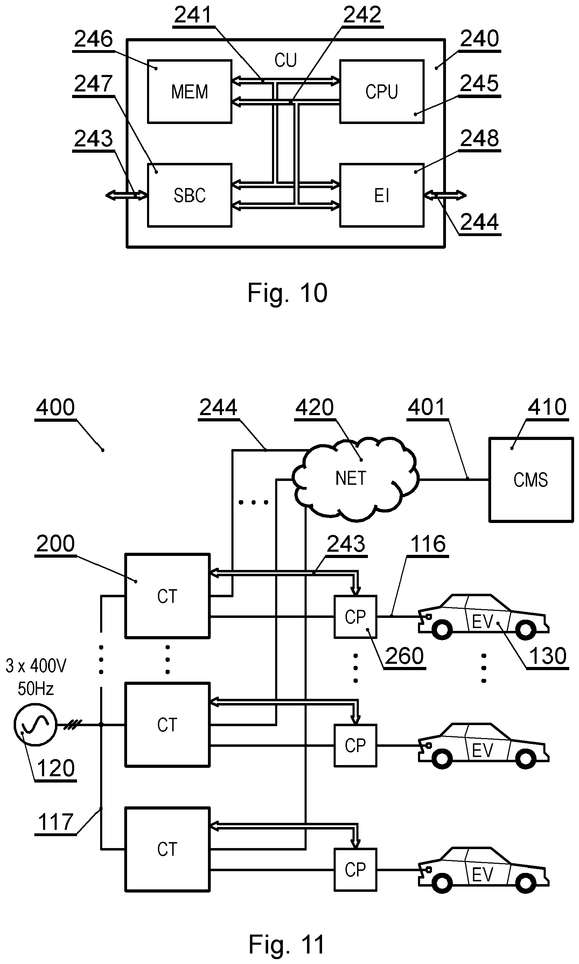

Operation of the charging terminal 200 is managed by the control unit 240, whose internal structure is presented in Fig. 10. It controls the operation of each of the converters 111, 112, 113, charging points 260 and the switch matrix 250 using the serial bus 243 one of the following standards: CAN, RS485 or other.

The control unit 240 consists of: a central processing unit (CPU) 245; a digital memory (MEM) 246 (e.g. RAM, Flash); a serial bus controller (SBC) 247, controlling transmission over the serial bus 243; external interfaces (EI) 248, providing communication with the central management system (CMS) 410 via a connection 244, e.g. Ethernet, Wi-Fi or other wired or wireless standard. The data and control bus 241 and the address bus 242 are used for communication between the CPU module 245 and the modules 246, 247, 248.

Depending on the number of vehicles 130 charged and the charging current values they report, the control unit 240 decides which vehicle converters 112 will be connected to the corresponding charging point 260 and consequently to the vehicle 130. Each of the converter modules 112 performing the charging task receives information about the charging current or voltage from the control unit 240.

Example configuration of charging terminal 200 is illustrated in Fig. 8. The presented charging terminal 200 includes: the mains converter block 210 consisting of five mains converter modules 111 with a total capacity of 250 kW; the storage converter block 230, consisting of four storage converter modules 113 with a total capacity of 200 kW; the vehicle converter block 220, consisting of eight vehicle converter modules 112 with a total capacity of 400 kW; the energy storage 115; the control unit 240; the switch matrix 250 and three charging points 260.

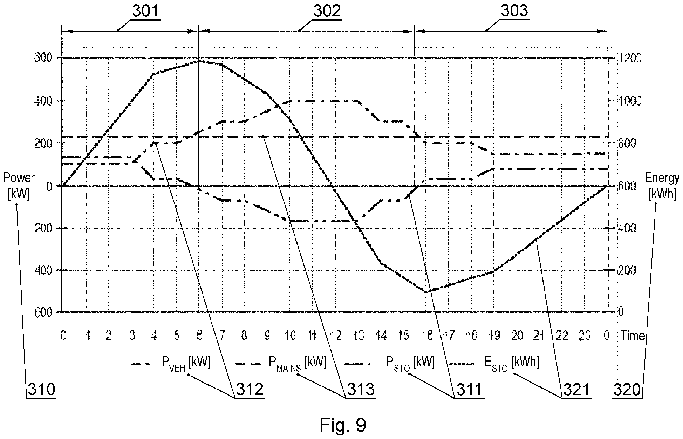

The daily variations of the energy 320 stored in the energy storage 115 and the variations of the power 310 with which the individual converter blocks 210, 220, 230 operate are shown in Fig. 9.

In the presented example of the daily operating cycle of the charging terminal 200 (Fig. 9), the modules 111 of the mains converter block 210 supply energy to the DC-Link circuit 114 working with a constant power P_{MAINS} 313 of approximately 230kW. As a result, the charging terminal 200 makes optimal use of the allocated power and evenly loads the power grid 120 over a daily cycle. Between 0:00 and 6:00 301 as well as 15:30 and 0:00 303, the energy storage 115 is charged with power P_{STO} 311 because the charging power of vehicles P_{VEH} 312 is lower than the assumed average power consumed from the power grid P_{MAINS} 313. Between 6:00 and 15:30 302, the energy storage 115 is being discharged because the vehicle charging power P_{VEH} 312 exceeds the average power consumed from the power grid P_{MAINS} 313. Fig. 9 additionally shows the changes in the energy E_{STO} 321 stored in the energy storage 115.

Fig. 9 presents averaged values for power and energy changes for the sake of graphs legibility. The actual power and energy values keep changing with much greater dynamics than shown in Fig. 9. A typical fast charging cycle can take several minutes: several minutes of charging the vehicle followed by a few minutes pause during which the next vehicle approaches the charging point and then charging the following vehicle.

Fig. 11 presents the general structure of the dispersed system 400 of charging terminals 200. The central management system 410 manages operation of the charging terminals 200. The Internet network (NET) 420 is used for communication between the central management system 410 and the charging terminals 200. The central management system 410 is connected to the Internet 420 via a connection 401, e.g. Ethernet, Wi-Fi or other standard. The charging terminals 200 are connected to the Internet 420 via the link 244, e.g. Ethernet, Wi-Fi or other standard. This solution allows for real-time monitoring of the terminals.

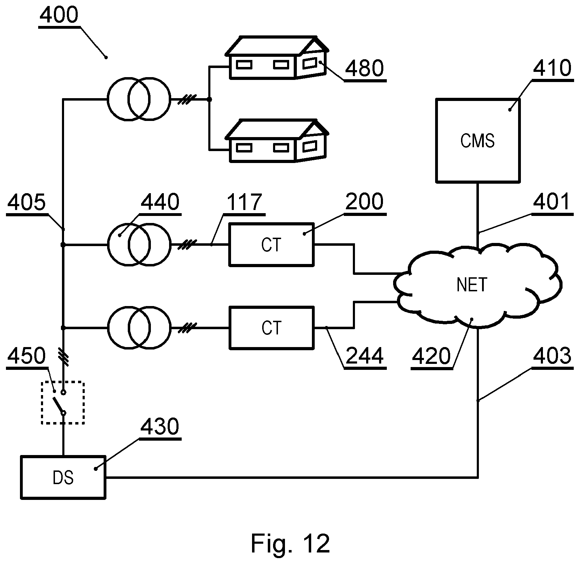

Additionally, the central management system 410 can communicate with the power distribution system (DS) 430 via the Internet 420, using links 401 and 403 (Fig. 12). This allows for the terminals 200 to cooperate with the power grid when operating in the island mode, where the local power system 405 is separated from the global power system 430 or when the energy storage 115 of the charging terminal 200 is used by the power grid as an energy buffer.

The charging terminal 200 together with the local loads 480 can form a separate island power system 405. When operating in an island system, the DC/DC storage converter 113 or the storage converter block 230 takes over the function of maintaining constant voltage in the DC-Link circuit 114, and the AC/DC mains converter 111 or the mains converter block 210 switches into supplying power to the power grid 405. The power supply back-up time of the dedicated grid 405 in the event of a power outage from the global power system 430 depends on the storage capacity of the energy storage 115 and the amount of energy consumed by local loads 480. Disconnection from the global power system 430 results from disconnecting the local power grid at the point 450.

Several charging terminals 200 can be connected to the power grid 120 with 3x400V at one point, as shown in Fig. 11, or one charging terminal 200 can be connected to one transformer 440, as shown in Fig 12. The transformer 440 reduces voltage in the medium voltage grid 405 to low voltage of the power grid 120.

Fig. 13 presents a generic method 500 of controlling the charging terminal 200 implemented by the control unit 240. There are three separate control paths to control of each of the blocks 210, 220, 230.

In the first control path 510, in step 511, after connecting the electric vehicle 130 to the charging point 260, the vehicle is detected by the terminal and the charging process is initiated. When initialising the charging process, the vehicle 130 in step 512 gives the information required to start charging. These are primarily the values of the charging current I_{CHG} and the maximum charging voltage UCHG_MAX. Next, in step 513 the current value of the voltage U_{VEH}, measured at high-current terminals 116 of the charging point 260 is compared against the voltage U_{CHG_MAX}. If U_{VEH} < U_{CHG_MAX} then in step 514 CC mode is used for charging, else the CV mode is employed for charging in step 515. The CC mode consist in charging with a constant charging current I_{CHG}, whereas the CV mode consists in limiting the charging current I_{CHG} as to not exceed the voltage UCHG_MAX. The CV mode is used in the battery balancing process. Next, in step 516 the available charging power supplied by the mains converter block 210 (P_{MAINS}) and the storage converter block 230 (P_{STO}) is verified. If the declared P_{VEH} charging power is less than or equal to the available power (P_{MAINS} + P_{STO}), then the vehicles are charged with P_{VEH} in step 518, otherwise the charging power is limited to the available power (P_{MAINS} + P_{STO}) in step 517. Subsequently, control goes back to step 512 to verify whether the charging parameters reported by the vehicle have not changed.

The second control path 520 is responsible for controlling the storage converter block 230. In the first step 521, it is checked whether the charging terminal 200 is in the island mode. If so, then in step 522, the storage converter block 230 maintains a constant voltage in the DC-Link circuit 114, otherwise it moves to step 523 to check whether the charged vehicles are consuming more power than supplied by the mains converter block 210. If the P_{VEH} is greater than P_{MAINS}, then in step 524 the storage converter block 230 discharges the energy storage 115 to increase the charging power provided that the energy storage 115 is not discharged. If P_{VEH} is less than or equal to the P_{MAINS}, then in step 525 the energy storage 115 is recharged with power P_{MAINS} - P_{VEH} provided that the energy storage 115 is not 100% charged. The controller then returns to step 521.

The third control path 530 is responsible for controlling the mains converter block 210. In step 531 the method checks if the charging terminal 200 has received information on cooperation with the island system. If not, then in step 533 the mains converter block 210 keeps the constant voltage in the DC-Link circuit 114. Otherwise, in step 532 the mains converter block 210 starts operating with the island system of the power grid and keeps the voltage in the separate power grid 405. The controller then returns to step 531.

## Claims

1. A charging terminal (200) for electric vehicles with an electrochemical energy storage having interfaces (116, 117) for connection and communication with the power grid (120, 405, 430) and with at least one charged vehicle (130), comprising:
- a mains converter block (210),
- a vehicle converter block (220),
- a storage converter block (230),
- a DC-Link circuit (114),
- at least one energy storage (115),
- a control unit (240),
- a switch matrix (250),
- at least one charging point (260),
**characterised in that**:
- the mains converter block (210) contains at least one AC/DC bidirectional mains converter (111);
- the vehicle converter block (220) contains at least one DC/DC unidirectional vehicle converter (112);
- the storage converter block (230) contains at least one AC/DC bidirectional storage converter (113);
- using a bus (243), the control unit (240) manages the configuration of the terminal (200) and is responsible for control and communication with each of the converters (111, 112, 113), the switch matrix (250) and charging points (260);
- based on data received from the control unit (240), the switch matrix (250) configures and connects outputs of the vehicle converters (112) in parallel, and connects said outputs to the selected charging point (260).

2. The charging terminal according to claim 1, **characterised in that** the energy storage (115) consists of a reusable battery (B2U).

3. The charging terminal according to claim 1 or 2, **characterised in that** if the energy storage (115) are of different types and have different operating voltage ranges, at least one storage converter (113) is assigned to each of said energy storage (115).

4. The charging terminal according to any one of the aforementioned claims 1-3, **characterised in that** the control unit (240), depending on the number of vehicles (130) to be charged and the charging parameters (I_{CHG}, UCHG_MAX) reported by said vehicles (130):
(a) determines the charging process scenario:
- charging the vehicle (130) batteries with energy from the power grid (120) in which the mains converters (111) supply energy to the vehicle converters (112) via a DC-Link circuit (114);
- charging vehicle (130) batteries with power from the power grid (120) and energy storage (115) in which the mains converters (111) together with the storage converters (113) supply energy to the vehicle converters (112);
- charging the vehicle (130) batteries and the energy storage (115) with power from the power grid (120) where the power supplied by the mains converters (111) to the DC-Link circuit (114) is sourced by the storage converters (113) that charge the energy storage (115) and by the vehicle converters (112) that charge the vehicle (130) batteries;
- charging the vehicle (130) batteries from the energy storage (115), in which the vehicle converters (112) draw all the power supplied to the DC-Link circuit (114) by the storage converters (113).
(b) uses the switch matrix (250) to configure which vehicle converters (112) will be connected to the relevant charging point (260) and consequently to the vehicle (130);
(c) determines the operation mode (CC, CV) of the connected vehicle converters (112).

5. The charging terminal according to claim 4,**characterised in that** if no charging takes place, the energy drawn from the energy storage (115) by the storage converters (113) can be returned to the power grid (120) through the mains converters (111).

6. The charging terminal according to claim 5, **characterised in that** together with local loads (480) it forms a separate island power system (405), where selected storage converters (113) or the storage converter block (230) take over the function of maintaining a constant voltage in the DC-Link circuit (114), whereas selected mains converters (111) or the mains converter block (210) enter the mode of powering the separate power grid (405).

7. A method of controlling (500) the charging terminal (200) according to any of the claims 1-6, implemented by the control unit (240) responsible for controlling each of the converters (111, 112, 113) in converter blocks (210, 220, 230) consisting of three simultaneously running control paths:
- a path (510) controlling the charging process of the vehicle (130) and vehicle converters (112) of the vehicle converter block (220);
- a path (520) controlling the storage converters (113) of the storage converter block (230) in the process of charging the vehicle (130) or operation of the charging terminal (200) in the island power system (405);
- a path (530) controlling the mains converters (111) of the mains converter block (210) in the process of charging the vehicle (130) or operation of the charging terminal (200) in the island power system (405).

8. A dispersed system (400) of charging terminals (200) consisting of:
- at least one charging terminal (200) according to any of the claims 1-6;
- a central control system (410), supervising and monitoring the operation of each charging terminal (200) in real-time;
- interfaces (244, 401, 402) enabling communication of the central management system (410) with individual charging terminals (200) and with the power system (430).

9. The dispersed system (400) of charging terminals (200) according to claim 8, which allows for the terminals to cooperate with the power grid when operating in the island mode, where the local power system (405) is separated from the global power system (430) or when the energy storage (115) of the charging terminal (200) is used by the power grid (120) as an energy buffer.
